# FASCICULE DE BREVET EUROPEEN

(11) **EP 2 771 159 B1**
(45) Date de publication et mention de la délivrance du brevet: **23.01.2019**
(21) Numéro de dépôt: 12778332.2
(22) Date de dépôt: 24.10.2012
(51) Int. Cl.: B29B 9/16, C08J 3/12

(54) **PROCÉDÉ DE PRÉPARATION DE GRANULES DE POLYAMIDE**
VERFAHREN ZUR HERSTELLUNG EINES POLYAMIDGRANULATS
METHOD FOR PREPARING POLYAMIDE GRANULES

(30) Priorité: 25.10.2011 FR 1159637
(43) Date de publication de la demande: 03.09.2014
(73) Titulaire: RHODIA OPERATIONS, 93306 Aubervilliers (FR)
(72) Inventeur: THIERRY, Jean-François, F-69340 Francheville (FR); BOULANGER, Phlippe, F-69390 Vernaison (FR)
(74) Mandataire: Chatelan, Florence Anne
(86) Numéro de dépôt international: PCT/EP2012/071005
(87) Numéro de publication internationale: WO 2013/060699

(56) Documents cités:
- FR-A1- 2 791 296
- US-A- 5 052 123
- US-A1- 2007 265 429

## Description

La présente invention concerne un procédé de préparation de granulés de polyamide selon la revendication 1. Ce procédé comprend en particulier des étapes d'extrusion du polymère, de refroidissement avec un liquide contenant de l'eau, de coupe du matériau extrudé, ainsi qu'une étape de refroidissement des granulés. Le procédé de l'invention est simple et rapide à mettre en oeuvre.

Un exemple de procédé de préparation de granulés de polyamide est donné par le document FR 2 791 296 A1.

Les polyamides sont des polymères présentant un intérêt industriel et commercial important. Les polyamides thermoplastiques sont obtenus soit par réaction entre deux monomères différents, soit par polycondensation d'un seul monomère. L'invention s'applique d'une part aux polyamides issus de deux monomères différents, dont le polyamide le plus important est le poly(hexaméthylène adipamide). L'invention s'applique d'autre part aux polyamides issus d'un seul monomère, dont le polyamide le plus important est le polycaprolactame.

La fabrication de polymères de type polyamide est principalement effectuée par polycondensation à partir des monomères, généralement par chauffage à température et pression élevées d'une solution aqueuse des monomères.

Les polyamides ainsi fabriqués, principalement sous forme fondue, sont ensuite généralement mis sous forme de granulés.

Ces granulés sont ensuite utilisés dans un grand nombre d'applications, notamment pour la fabrication de fils, fibres ou filaments, ou pour des mises en forme d'articles par moulage, injection, extrusion. Ils peuvent notamment être utilisés dans le domaine des plastiques techniques, généralement après une étape de formulation.

Ces granulés doivent présenter une teneur en eau relativement faible, qui varie selon les applications et les caractéristiques du polyamide (poids moléculaire etc.). En effet, une trop grande quantité d'eau présente dans le polyamide peut provoquer, lors d'une refusion par exemple, une diminution du poids moléculaire. Cette baisse de poids moléculaire peut conduire à une dégradation des propriétés mécaniques des articles finaux à base de polyamide, à une dégradation de leurs propriétés d'usage telles que l'aspect de surface, ou à une diminution des performances des procédés de transformation, tels que le filage (casses etc.).

Or, les granulés de polyamide sont principalement obtenus par extrusion du polyamide à l'état fondu, refroidissement et coupe du matériau extrudé sous forme de granulés, en utilisant généralement de l'eau comme moyen de refroidissement. Une étape ultérieure de séchage des granulés est donc souvent nécessaire afin d'obtenir des granulés ayant une faible teneur en eau.

Cette étape de séchage est généralement réalisée dans des séchoirs tels que des tours de séchage, des trémies, des séchoirs rotatifs, durant plusieurs heures, à température élevée, généralement supérieure à 80°C. Ces conditions nécessitent souvent de réaliser le séchage et le conditionnement en milieu exempt d'oxygène, à l'aide d'un gaz inerte, pour éviter le jaunissement des granulés lié à l'oxydation du polyamide par l'oxygène de l'air, phénomène bien connu. Ce gaz est de préférence préalablement séché. Ces conditions de séchage délicates et contraignantes représentent un coût non négligeable dans la fabrication du polyamide.

Par ailleurs, on cherche également, lorsque l'on a obtenu un polyamide à l'état fondu qui présente d'ores et déjà une teneur en eau relativement faible, à maintenir cette teneur en eau faible lors de la préparation des granulés à partir de ce polyamide, afin d'obtenir un granulé de polyamide final ayant une faible teneur en eau.

A cet effet, et afin de remédier aux inconvénients mentionnés ci-dessus, l'invention propose un procédé de préparation de granulés de polyamide comprenant les étapes suivantes :
a) extruder le polyamide à l'état fondu,
b) refroidir le matériau obtenu à l'aide d'un liquide de refroidissement contenant de l'eau,
c) couper le matériau sous la forme de granulés,
d) séparer le liquide de refroidissement et le matériau,
e) refroidir les granulés séparés du liquide de refroidissement jusqu'à atteindre une température moyenne des granulés inférieure ou égale à 55°C,
   - l'étape c) de coupe étant réalisée lors de l'étape b), après l'étape b) et avant l'étape de séparation d), ou après l'étape de séparation d),
   - la durée du contact entre le matériau extrudé et le liquide de refroidissement étant inférieure ou égale à 10 secondes, et
   - la durée de l'étape e) étant inférieure ou égale à 10 minutes.

Ce procédé est simple et rapide, ne nécessite pas de chauffage des granulés, ni de séchage en milieu inerte. Il est donc économique, permet une faible dépense énergétique et donne accès à un polyamide de qualité compatible avec ses applications.

Ainsi, avantageusement, le procédé de préparation de granulés de polyamide selon l'invention ne comprend pas d'étape de séchage en milieu gaz inerte des granulés de polyamide. De façon avantageuse, le procédé de préparation de granulés de polyamide selon l'invention ne comprend pas d'étape de chauffage des granulés de polyamide. Préférentiellement, le procédé de préparation de granulés de polyamide selon l'invention ne comprend ni d'étape de séchage en milieu inerte des granulés de polyamide, ni d'étape de chauffage des granulés de polyamide.

Les granulés obtenus par le procédé de l'invention peuvent être de différentes formes. Ils peuvent par exemple être sous forme cylindrique, sphérique, elliptique etc.

Le polyamide de l'invention peut être un mélange ou un alliage de polyamides, ou un copolyamide.

De façon préférée, le polyamide est choisi parmi le polyamide 6, le polyamide 11, le polyamide 12, le polyamide 4-6, le polyamide 5-6, le polyamide 6-6, le polyamide 6-10, le polyamide 6-12, le polyamide 9T, le polyamide 10T et leurs copolymères. Il peut également s'agir de copolymères comprenant des motifs issus de l'utilisation de monomères diacide du type acide isophtalique ou téréphtalique, ou bien de monomères diamine du type métaxylylène diamine ou paraxylylène diamine. On citera par exemple les motifs 4T, 6T, 6I, MXD6, PXD6...etc.

Selon un mode particulièrement avantageux de l'invention, on préfère le polyamide 6-6.

Le polyamide peut être sous la forme d'une composition à base du polyamide comme matrice et comprenant des additifs tels que des surfactants, des nucléants comme le talc, des plastifiants etc. Ces additifs sont connus de l'homme du métier.

La composition peut également comprendre d'autres composés, tels que des charges de renfort comme les fibres de verre, des matifiants comme le dioxyde de titane ou le sulfure de zinc, des pigments, des colorants, des stabilisants chaleur ou lumière, des agents bioactifs, des agents antisalissure, des agents antistatiques, des ignifugeants etc. Cette liste n'a aucun caractère exhaustif.

### ETAPE a)

L'étape a) qui consiste à extruder le polyamide à l'état fondu est mise en oeuvre d'une manière classique, notamment à travers une filière. Cette méthode est connue de l'homme du métier.

La filière est généralement placée en sortie de réacteur de polymérisation, ou en sortie d'une ligne de transfert alimentée par du polyamide fondu à l'aide d'une pompe, ou en sortie d'un dispositif de malaxage pouvant générer une pression supérieure à la pression atmosphérique, généralement une extrudeuse.

En sortie de filière, on obtient un matériau généralement sous la forme de joncs ou de rubans, ou directement sous forme de granulés dans le cas par exemple d'une coupe en tête noyée comme expliqué plus loin dans la description.

Le débit d'extrusion du polyamide est généralement compris entre 500 et 15000 kg/h.

### ETAPE b)

L'étape b) consiste à refroidir le matériau obtenu après extrusion, par contact avec un liquide contenant de l'eau.

Le refroidissement du matériau permet notamment de solidifier au moins superficiellement ce dernier.

Le liquide de refroidissement contenant de l'eau n'est pas (ou peu) un solvant du polymère. Il peut par exemple comprendre un alcool tel que l'éthanol, l'isopropanol, le butanol.

Le liquide de refroidissement peut également comprendre des additifs tels que des bactéricides, des antitartres etc.

Le liquide de refroidissement, de préférence de l'eau, est à une température lors de l'étape b) avantageusement comprise entre 5 et 95°C, de préférence comprise entre 10 et 80°C.

Les dispositifs de refroidissement convenables pour une telle étape sont connus de l'homme du métier.

Ce dispositif de refroidissement peut consister en un dispositif de pulvérisation d'eau situé à proximité du dispositif de la plaque de filière. Il peut également s'agir d'un bain ou d'un courant d'eau situé à proximité ou au contact du dispositif de la plaque de filière dans lequel le matériau extrudé est introduit. Un dispositif de ruissellement d'eau peut également être mis en oeuvre.

### ETAPES c) et d)

Selon un mode de réalisation particulier du procédé de l'invention, le matériau ainsi refroidi est ensuite coupé sous la forme de granulés selon l'étape c) du procédé de l'invention et avant l'étape d) de séparation du liquide de refroidissement et du matériau. Cette étape de coupe peut également intervenir durant l'étape b) de refroidissement, ou après l'étape d) de séparation du liquide de refroidissement et du matériau.

Les dispositifs de coupe convenables pour cette étape c) sont connus de l'homme du métier. Le dispositif de coupe peut être un système de fraise avec des dents ; il peut également s'agir d'un système comprenant des couteaux et un porte-couteaux. Le dispositif comprend généralement un moteur pour entraîner la fraise ou le porte-couteaux. Le dispositif de coupe est habituellement rotatif.

Le procédé de l'invention comprend donc une étape d) de séparation du liquide de refroidissement et du matériau polymérique. Cette étape permet d'éliminer la majeure partie du liquide de refroidissement.

### Mode b / c / d

Selon un premier mode de réalisation particulier du procédé de l'invention, l'étape c) de coupe est réalisée après l'étape b) et avant l'étape d) de séparation du liquide de refroidissement et du matériau. Par « après l'étape b) » on comprendra que l'étape b) a déjà commencé lorsque l'étape c) est mise en oeuvre. Dans ce cas, le liquide de refroidissement, généralement de l'eau, est séparé du matériau polyamide alors qu'il se trouve sous la forme de granulés, c'est-à-dire après l'étape de coupe c). La séparation peut par exemple être réalisée à l'aide d'une centrifugeuse qui sépare l'eau et les granulés, ou à l'aide d'un dispositif de cyclonage, ou de tout autre dispositif utilisant la force centrifuge. La séparation peut également être réalisée à l'aide d'un dispositif alimenté en air qui assure à la fois le convoyage des granulés et l'expulsion de l'eau au travers de grilles, par exemple un dispositif de type Aero® commercialisé par la société Automatik Plastics Machinery.

Il convient de remarquer que dans ce premier mode, les granulés sont en contact avec le liquide de refroidissement jusqu'à la fin de l'étape d) de séparation du liquide de refroidissement et des granulés. Le refroidissement effectif des granulés s'étend donc de l'étape b) à l'étape d) en passant par l'étape c).

### Mode b / d / c

Selon un deuxième mode de réalisation particulier du procédé de l'invention, l'étape c) de coupe est réalisée après l'étape d) de séparation du liquide de refroidissement et du matériau.

Dans ce cas le liquide de refroidissement, généralement de l'eau, est séparé des joncs ou des rubans de polymère, puis les joncs ou rubans sont coupés « à sec ». La séparation peut être réalisée par exemple par sortie des joncs ou rubans hors du bain par un dispositif d'entraînement. Le liquide de refroidissement peut être éliminé en utilisant la gravité, ou en aspirant le liquide à travers une grille ou tout autre dispositif ajouré sur lesquels circulent les joncs ou rubans. Ces dispositifs sont connus de l'homme du métier.

Il convient de remarquer que dans ce deuxième mode, le matériau polyamide est en contact avec le liquide de refroidissement jusqu'à la fin de l'étape d) de séparation du liquide de refroidissement et du matériau. Le refroidissement effectif du matériau a donc lieu au cours des étapes b) et d).

### Mode b+c / d

Selon un troisième mode de réalisation particulier du procédé de l'invention, les étapes b) et c) démarrent simultanément.

Selon ce mode de réalisation, les étapes b) et c) sont avantageusement mises en oeuvre à l'aide d'un dispositif de coupe disposé immédiatement à la sortie de la filière. Un tel dispositif de granulation est connu de l'homme du métier. Il comprend au moins un dispositif de coupe qui fait face à la plaque filière à travers laquelle le polymère est extrudé, et un dispositif de refroidissement. Le dispositif de coupe comprend généralement des couteaux, un porte-couteaux, et un moteur pour entraîner le porte-couteaux. Le porte-couteaux est habituellement rotatif. Le dispositif de refroidissement peut consister en un dispositif de pulvérisation ou de circulation de liquide de refroidissement situé à proximité du dispositif de la plaque filière. C'est le cas des granulateurs à « coupe en tête » connus de l'homme du métier. Le dispositif de coupe et la plaque filière peuvent également être disposés dans une chambre remplie de liquide de refroidissement, il s'agit dans ce cas d'un granulateur à « coupe en tête noyée ». Dans cette chambre remplie de liquide de refroidissement, le liquide de refroidissement est généralement en circulation et il assure le refroidissement et le transport des granulés de polyamide formés au niveau du dispositif de coupe vers un séparateur, où l'étape d) est mise en oeuvre. La séparation peut être réalisée à l'aide d'une centrifugeuse qui sépare le liquide de refroidissement et les granulés, ou par exemple à l'aide d'un dispositif de cyclonage. De tels dispositifs de granulateurs à « coupe en tête noyée » sont par exemple décrits dans le brevet américain US 5 059 103.

Selon un autre mode de réalisation particulier du procédé de l'invention, les étapes b) à d) du procédé sont mises en oeuvre sur une plateforme de granulation, qui comprend généralement un dispositif de guidage et de refroidissement du matériau extrudé, un dispositif de coupe et un dispositif de transfert vers un dispositif de séparation. Ces plateformes de granulation sont connues de l'homme du métier. Le dispositif de guidage peut être horizontal, vertical ou incliné d'un angle allant de 0 à 90° par rapport à l'horizontale.

La durée du contact entre le matériau polymérique et le liquide de refroidissement, selon le procédé de l'invention, est inférieure à 10 secondes, de préférence inférieure à 8 secondes, et avantageusement inférieure ou égale à 6 secondes. Cette durée de contact entre le matériau polymérique et le liquide de refroidissement est suffisante pour solidifier au moins superficiellement le matériau, et optimisée pour minimiser la quantité d'eau absorbée à la surface du matériau, tout en permettant d'atteindre une température avant l'étape e) telle que l'élimination par évaporation de l'eau présente à la surface du granulé est facilitée.

Par « durée du contact entre le matériau et le liquide de refroidissement », on comprendra qu'il s'agit de la somme des temps de contact entre matériau polymérique et liquide de refroidissement correspondant à chacune des étapes au cours desquelles le matériau et le liquide de refroidissement sont en contact. En d'autres termes, cette durée inclut l'étape b) et l'étape d), et le cas échéant l'étape c) lorsque cette dernière est réalisée au cours de l'étape b) ou entre l'étape b) et l'étape d).

Ces temps de contact sont équivalents aux temps de séjour du matériau polymérique dans chacune des étapes, et peuvent être aisément mesurés par des techniques connues de l'homme du métier, ou calculés à partir des débits volumiques de matériau et de liquide de refroidissement, et de la géométrie des différents conduites, canaux etc., dans lesquels s'effectuent les écoulements.

### ETAPE e)

Le procédé de l'invention comprend une étape e) de refroidissement des granulés séparés du liquide de refroidissement, jusqu'à atteindre une température moyenne des granulés inférieure ou égale à 55°C, de préférence inférieure ou égale à 45°C.

Par « température moyenne des granulés » on entend la température atteinte par les granulés lorsqu'ils sont placés dans un récipient isolé thermiquement pendant une certaine durée d'uniformisation. Par exemple en pratique, un échantillon de granulés est introduit dans un récipient isolé thermiquement de type Dewar, et la température au sein du lit de granulés est mesurée après une durée d'uniformisation de quelques minutes. Il peut être fait référence aux exemples de l'invention pour plus de détails sur cette méthode de mesure.

La température moyenne des granulés avant l'étape e) est avantageusement comprise entre 60 et 150°C, de préférence comprise entre 70 et 130°C, et encore plus préférentiellement entre 70 et 120°C. Selon le procédé de l'invention, les granulés sont donc de préférence à une température relativement élevée avant l'étape e), ce qui favorise l'élimination par évaporation de l'eau présente à la surface du granulé. En effet, en dessous de 60°C, les granulés ne possèdent pas suffisamment d'énergie thermique interne pour pouvoir éliminer correctement l'eau de surface. Au-delà de 150°C, les réactions de dégradation thermooxydante sont très rapides, générant ainsi un risque de jaunissement trop important.

Tout dispositif de refroidissement d'un matériau solide peut être mis en oeuvre dans le cadre de l'invention, à condition qu'il assure un refroidissement suffisamment rapide (en 10 minutes ou moins) des granulés jusqu'à une température moyenne des granulés inférieure ou égale à 55°C, et que ce dispositif de refroidissement ne mette pas en contact le matériau polyamide avec une phase liquide contenant de l'eau.

Il est important que l'étape e) permette de refroidir au moins jusqu'à une température moyenne des granulés inférieure à 55°C, car si les granulés sont récupérés à une température supérieure alors le risque de jaunissement au cours des opérations ultérieures de stockage, de transport, augmente considérablement.

Il est également nécessaire que le refroidissement soit rapide (en 10 minutes ou moins), pour éviter un jaunissement trop important pendant le refroidissement et le stockage ultérieur, et aussi pour limiter la reprise d'humidité lorsque les granulés sont mis au contact d'un gaz (de l'air ambiant, par exemple) non séché.

### Refroidissement avec un gaz

Selon un premier mode de réalisation de l'étape e) du procédé, ladite étape e) est réalisée par traitement des granulés avec un gaz à une température comprise entre 0 et 40°C.

Tout dispositif de traitement d'un matériau solide avec un gaz, connu de l'homme du métier, peut être mis en oeuvre pour réaliser le traitement de l'étape e). Il peut s'agir d'un dispositif de projection de gaz sur un solide. Généralement une agitation des granulés est mise en oeuvre : elle peut soit être induite par le gaz lui-même, soit être générée à l'aide d'un appareil d'agitation. Cette agitation permet une bonne efficacité et une bonne homogénéité du refroidissement des granulés.

Le gaz du traitement de l'étape e) est avantageusement de l'air, en particulier de l'air ambiant. Par air ambiant, on entend au sens de l'invention que l'air n'a subi aucun traitement de chauffage ou de refroidissement, ni aucun séchage ni traitement pour le débarrasser de l'oxygène qu'il contient. Ceci représente également un avantage du procédé de l'invention. En effet il est connu que le polyamide jaunit lorsqu'il est soumis à des températures élevées pendant une longue période, ce qui est problématique. Ainsi dans les procédés de séchage de l'art antérieur, qui mettent en oeuvre des températures élevées et des durées importantes, on réalise généralement le séchage dans une atmosphère exempte d'oxygène à l'aide d'un gaz inerte, pour éviter ce problème de jaunissement. Or, dans le procédé de l'invention, le refroidissement de l'étape e) est rapide et réalisé à des températures faibles ; il n'est donc pas nécessaire de réaliser le refroidissement en atmosphère inerte, ce qui simplifie grandement le procédé. De plus, contrairement aux procédés de l'art antérieur, le gaz n'a pas besoin d'être conditionné : il n'a pas par exemple à être séché, refroidi, réchauffé, ou débarrassé de l'oxygène qu'il contient.

Ainsi un des avantages du procédé de l'invention est que cette étape e) ne nécessite pas ou peu de chauffage, contrairement aux procédés de l'art antérieur.

Selon un premier mode de réalisation de l'étape e) par traitement avec un gaz, celle-ci est mise en oeuvre dans un lit fluidisé ou un lit bouillonnant, de préférence un lit fluidisé. Ces dispositifs sont connus de l'homme du métier.

Selon un autre mode de réalisation de l'étape e) par traitement avec un gaz, l'étape e) est mise en oeuvre à l'aide d'un convoyeur équipé d'un système de refroidissement direct par injection d'air. Il peut s'agir d'un convoyeur hélicoïdal vibrant, c'est-à-dire un convoyeur vibrant comportant au moins une spire formant un canal hélicoïdal et un moyen de refroidissement par injection directe d'air sur les granulés. Ce type de convoyeur vibrant est connu de l'homme du métier.

D'autres modes de réalisation de l'étape e) par traitement avec un gaz peuvent être envisagés. L'homme du métier saura aisément trouver des moyens équivalents utilisables pour la mise en oeuvre de cette étape.

### Refroidissement par contact avec une surface refroidie

Selon un deuxième mode de réalisation de l'étape e) du procédé, ladite étape e) est réalisée par mise en contact des granulés avec une surface dont la température est comprise entre 5 et 35°C.

Dans ce deuxième mode, l'humidité qui sort des granulés pour aller en phase gaz est avantageusement éliminée, par exemple par convection naturelle ; en d'autres termes, l'atmosphère au-dessus des granulés est avantageusement une atmosphère "ouverte" et non "fermée", c'est-à-dire un refroidisseur à l'air libre par exemple.

Selon ce mode de réalisation, l'étape e) est mise en oeuvre à l'aide d'un convoyeur, par exemple un convoyeur hélicoïdal vibrant, équipé d'un système de refroidissement indirect par double enveloppe dans laquelle circule un fluide de refroidissement à une température comprise entre 5 et 35°C.

Dans le cas particulier où le dispositif de refroidissement des granulés est un convoyeur hélicoïdal vibrant, c'est-à-dire un convoyeur vibrant comportant au moins une spire formant un canal hélicoïdal, une partie au moins de la paroi métallique de ce canal en contact avec les granulés est une paroi équipée d'une double enveloppe dans laquelle circule un fluide de refroidissement à une température comprise entre 5 et 35°C. Ce type de convoyeur est connu de l'homme du métier.

D'autres types de convoyeurs sont utilisables pour la mise en contact des granulés avec une surface dont la température est comprise entre 5 et 35°C. On pourra citer par exemple des convoyeurs à vis d'Archimède. La géométrie du convoyeur peut varier dans une large mesure, le convoyeur hélicoïdal vibrant étant préféré.

La durée de l'étape e) de refroidissement est inférieure à 10 minutes, de préférence inférieure à 5 minutes. Cela représente un autre avantage du procédé de l'invention, qui met en oeuvre une étape de refroidissement très courte, de l'ordre de quelques dizaines de secondes, contrairement aux procédés de l'art antérieur qui nécessitent un séchage souvent de plusieurs heures. Dans le mode décrit précédemment où l'on refroidit à l'aide d'un lit fluidisé, la durée de l'étape e) est même avantageusement inférieure à 2 minutes.

Le procédé de l'invention comprend plusieurs dispositifs : des dispositifs d'extrusion, de refroidissement, de coupe, de séparation etc. Des moyens de guidage et de transport du matériau extrudé et des granulés, au sein de, et entre ces différents dispositifs peuvent être mis en oeuvre. Il s'agit de moyens connus de l'homme du métier. Par exemple des bandes transporteuses, des guides de joncs/rubans avec ou sans rainures peuvent être mis en oeuvre. Les granulés peuvent être transportés à l'aide d'un liquide tel que l'eau etc.

Il est bien sûr possible de réaliser des traitements supplémentaires des granulés en aval du refroidisseur, comme par exemple des opérations de tamisage, mélangeage, traitement d'enrobage en surface, etc.

Le procédé de l'invention peut être continu ou discontinu.

Après l'étape e), les granulés présentent avantageusement un taux d'humidité compris entre 0,1 et 0,4 % en masse d'eau (par rapport à la masse de granulés). C'est la combinaison des étapes du procédé de l'invention qui permet d'obtenir les caractéristiques d'humidité précitées et ainsi en particulier de fournir des granulés de polyamide adaptés pour la fabrication de formulations destinées à l'injection/moulage de manière simple et rapide, en mettant en oeuvre des conditions très douces qui limitent le risque de dégradation du polyamide (pas de jaunissement et conservation des propriétés mécaniques).

C'est pourquoi la présente invention vise également l'utilisation du procédé de l'invention pour la préparation de granulés ayant un taux d'humidité compris entre 0,1 et 0,4 % en masse d'eau (par rapport à la masse de granulés). De façon avantageuse, ladite utilisation est particulièrement adaptée à la préparation de granulés de polyamide ayant une masse moyenne de granulés comprise entre 1,0 et 5,0 g pour 100 granulés, de préférence comprise entre 1,5 et 4,0 g pour 100 granulés.

Les granulés ainsi obtenus peuvent ensuite être stockés ou transportés, pour être utilisés dans un grand nombre d'applications, notamment pour la fabrication de fils, fibres ou filaments, ou pour des mises en forme d'articles par moulage, injection, extrusion. Ils peuvent notamment être utilisés dans le domaine des plastiques techniques. Dans ces applications ils sont généralement fondus puis mis en forme.

D'autres détails ou avantages de l'invention apparaîtront plus clairement à la vue des exemples donnés ci-dessous.

### EXEMPLES

### Description des méthodes de caractérisation

### Mesure de la température des granulés

Un récipient isolé thermiquement de type Dewar, de volume 500 mL, est rempli avec les granulés dont on veut mesurer la température moyenne. Une sonde de température de type thermocouple est ensuite introduite au coeur du lit de granulés. La température est lue après une durée d'uniformisation de 3 minutes. Le récipient Dewar est vidé, et procédure de mesure est répétée immédiatement. Le résultat retenu est celui de la deuxième mesure.

### Taux d'humidité

La concentration en eau dans les granulés est mesurée par titration Karl Fischer, au moyen d'un four de type Metrohm KF 768 ou équivalent, et d'un coulomètre de type Metrohm KF 756 ou équivalent, selon la norme ISO 15512 2^{ème} édition (2008-05-15).

### Indice de viscosité

L'indice de viscosité du polyamide 66 est mesuré à une concentration de 0,005 g. mL⁻¹, en solution dans l'acide formique à 90% en masse, selon la norme ISO 307. Le résultat est exprimé en mL.g⁻¹.

### Masse moyenne de granulés

La masse moyenne de granulés est déterminée par pesée simple de 100 granulés, au moyen d'une balance de précision. Le résultat est exprimé en grammes pour 100 granulés, arrondi au multiple de 0,05 le plus proche.

### Indice de Jaune

La couleur des granulés de polymère est déterminée au moyen d'un chromamètre Konica Minolta CR-310 ou équivalent, par mesure avec illuminant C des composantes trichromatiques Yxy d'un lit de granulés, à partir desquelles l'indice de jaune peut être calculé. La limite maximale acceptable correspond à une valeur de l'indice de jaune de +1.

### Essais

### Exemple 1 (invention)

### Préparation de polyamide 66

Une solution aqueuse à 52 % en masse de Sel N (mélange équimolaire d'hexaméthylènediamine et d'acide adipique) est chargée dans un évaporateur avec 0,39 % en poids d'une solution aqueuse d'hexaméthylènediamine à 32,4 % en poids, 0,10 % en poids d'une solution aqueuse d'acide acétique à 75 % en poids, 0,009 % en poids d'une solution aqueuse d'hypophosphite de sodium monohydraté à 15 % en poids, et 9 ppm d'antimousse (composition silicone). Le mélange est concentré dans l'évaporateur jusqu'à une concentration de 87 % en poids. Cette solution concentrée est alors transférée dans un autoclave. L'autoclave est chauffé de façon à obtenir une pression autogène de 1,85 MPa, puis sous une pression maintenue à 1,85 MPa, de l'eau sous forme vapeur étant continument évacuée du milieu réactionnel au moyen d'une vanne de régulation. Lorsque la température du milieu réactionnel atteint 245°C, la pression est réduite graduellement, jusqu'à la pression atmosphérique. Pendant cette phase de décompression, le chauffage est poursuivi et la température de la masse continue à s'élever. Le réacteur est ensuite maintenu sous pression atmosphérique pendant 18 minutes (phase de finition) ; la température atteinte par la masse réactionnelle à la fin de cette étape est de 276°C. Le réacteur est ensuite mis sous une pression d'azote comprise entre 0,40 et 0,45 MPa pour permettre l'extrusion du polymère.

### Extrusion, granulation et refroidissement du polymère

Le polymère fondu contenu dans l'autoclave est extrudé sous forme de joncs au travers d'une filière comprenant 66 trous, au débit de 1,3 kg par minute et par jonc (étape a)). Les joncs de polymère fondu sortant de la filière sont réceptionnés par une plateforme de granulation, où sont réalisées les opérations successives suivantes :
- Transport des joncs sur une plage de guidage recouverte d'un film d'eau (étape b)) ; cette eau est alimentée à une température de 15°C par une lèvre située en tête de plage, et aussi par plusieurs rampes équipées de buses de pulvérisation situées au-dessus de la plage. La longueur parcourue par les joncs sur la plage est de 1,40 m.
- Alimentation des joncs partiellement refroidis dans un bloc de coupe (type : USG600, de la société Automatik Plastics Machinery) comprenant un dispositif d'entraînement des joncs, assurant une vitesse d'appel des joncs de 180 m.min⁻¹, et un dispositif de coupe au moyen d'une fraise et d'une contre-lame. Les joncs sont coupés dans le dispositif de coupe (étape c)) et les granulés résultants sont entraînés par l'eau.
- Convoyage des granulés en mélange avec de l'eau, dans une conduite de longueur égale à 5 m (suite de l'étape b)) ; le temps de passage des granulés dans cette conduite est égal à 4 s.
- Séparation des granulés de l'eau de refroidissement (étape d)), dans un dispositif à impact alimenté en air permettant le convoyage des granulés le long d'un canal curviligne en même temps que l'élimination de l'eau au travers de plusieurs grilles (appareil du type GT 800/2, de la société Automatik Plastics Machinery). L'air utilisé pour cette séparation est de l'air ambiant prélevé dans l'atelier, à la température de 20°C et au débit de 7800 m³.h⁻¹. Le temps de séjour des granulés dans l'appareil séparateur est de l'ordre de 1 s.

Le débit total d'eau de refroidissement utilisé sur la plateforme est de 20 m³.h⁻¹. La température de l'eau en sortie de plateforme est de 45°C.

La durée du contact entre le matériau extrudé et le liquide de refroidissement (étapes b+c+d) est égale à 6 secondes.

Les granulés sortant du séparateur alimentent directement un refroidisseur de type lit fluidisé (étape e)) (commercialisé par la société Comessa). Ce refroidisseur comprend une sole de largeur 0,8 m et de longueur 4 m percée de trous, à travers lesquels est injecté de l'air ambiant prélevé à l'extérieur de l'atelier (débit 18000 m³.h⁻¹ ; température 20°C ; humidité relative 60 %). Le temps de séjour des granulés dans le refroidisseur est de 25 s.

En sortie de refroidisseur, les granulés passent sur un crible, puis sont envoyés dans un silo de stockage au moyen d'un dispositif de transport pneumatique.

Pendant l'opération de granulation, la température et le taux d'humidité des granulés sont mesurés sur plusieurs échantillons, prélevés à la sortie du séparateur (qui correspond à l'entrée du refroidisseur), ou à la sortie du refroidisseur. Les résultats obtenus sont résumés dans le Tableau 1.

D'autres caractéristiques (indice de viscosité, masse moyenne de granulés et indice de jaune) sont mesurées sur un échantillon moyen, prélevé en sortie de refroidisseur. L'indice de jaune est mesuré aussi sur un échantillon représentatif du lot de polyamide fabriqué, prélevé en sortie de silo après 48 h de stockage. Les résultats correspondants sont rassemblés dans le Tableau 2.

### Exemple 2 (invention)

### Préparation de polyamide 66

Un polyamide 66 est préparé suivant une méthode identique à celle de l'exemple 1, aux différences près suivantes :
- Ne sont chargés dans l'évaporateur que la solution aqueuse de Sel N à 52 % en masse et l'antimousse, au taux de 9 ppm,
- La durée de l'étape de finition sous pression atmosphérique est de 23 min (au lieu de 18 minutes),
- Après l'étape de finition, le réacteur est mis sous une pression d'azote comprise entre 0,65 et 0,70 MPa (au lieu de 0,40-0,45 MPa).

### Extrusion, granulation et refroidissement du polymère

Le polymère est ensuite extrudé, granulé et refroidi selon un procédé identique à celui de l'exemple 1, à la différence près que la longueur de la conduite dans laquelle s'effectue le convoyage des granulés en mélange avec de l'eau, en sortie du bloc de coupe, est de 3 m au lieu de 5 m. Ainsi, le temps de passage des granulés dans cette conduite est de 3 secondes, au lieu de 4 secondes.

La durée du contact entre le matériau extrudé et le liquide de refroidissement (étapes b+c+d) est égale à 5 secondes.

La température et le taux d'humidité des granulés, mesurés pendant l'opération de granulation, sont résumés dans le Tableau 1. L'indice de viscosité, la masse moyenne de granulés et l'indice de jaune, mesurés sur un échantillon moyen prélevé en sortie de refroidisseur, sont rassemblés dans le Tableau 2. L'indice de jaune mesuré sur un échantillon représentatif du lot de polyamide fabriqué, prélevé en sortie de silo après 48 h de stockage, est également reporté dans le Tableau 2.

### Exemple 3 (comparatif)

### Préparation de polyamide 66

Une solution aqueuse à 62 % en masse de Sel N (mélange équimolaire d'hexaméthylènediamine et d'acide adipique) est chargée dans un évaporateur avec 40 ppm d'une émulsion aqueuse d'antimousse (composition silicone à 20 % de produit actif). Le mélange est concentré dans l'évaporateur jusqu'à une concentration de 85 % en poids. Cette solution concentrée est alors transférée dans un autoclave. L'autoclave est chauffé de façon à obtenir une pression autogène de 1,85 MPa, puis sous une pression maintenue à 1,85 MPa, de l'eau sous forme vapeur étant continument évacuée du milieu réactionnel au moyen d'une vanne de régulation. Lorsque la température du milieu réactionnel atteint 245°C, la pression est réduite graduellement, jusqu'à la pression atmosphérique. Pendant cette phase de décompression, le chauffage est poursuivi et la température de la masse continue à s'élever. Le réacteur est ensuite maintenu sous pression atmosphérique pendant 19 minutes (phase de finition) ; la température atteinte par la masse réactionnelle à la fin de cette étape est de 276°C. Le réacteur est ensuite mis sous une pression d'azote comprise entre 0,50 et 0,55 MPa pour permettre l'extrusion du polymère.

### Extrusion, granulation et refroidissement du polymère

Le polymère fondu contenu dans l'autoclave est extrudé sous forme de joncs au travers d'une filière comprenant 60 trous, au débit de 1,6 kg par minute et par jonc. Les joncs de polymère fondu sortant de la filière sont réceptionnés par une plateforme de granulation, où sont réalisées les opérations successives suivantes :
- Transport des joncs sur une plage de guidage recouverte d'un film d'eau ; cette eau est alimentée à une température de 17°C par une lèvre située en tête de plage, et aussi par plusieurs rampes équipées de buses de pulvérisation situées au-dessus de la plage. La longueur parcourue par les joncs sur la plage est de 3 m.
- Alimentation des joncs partiellement refroidis dans un bloc de coupe (type : USG600, de la société Automatik Plastics Machinery) comprenant un dispositif d'entraînement des joncs, assurant une vitesse d'appel des joncs de 180 m.min⁻¹, et un dispositif de coupe au moyen d'une fraise et d'une contre-lame. Les joncs sont coupés dans le dispositif de coupe et les granulés résultants sont entraînés par l'eau.
- Convoyage des granulés en mélange avec de l'eau dans une conduite de longueur égale à 14 m ; le temps de passage des granulés dans cette conduite est d'environ 11 s.
- Séparation des granulés de l'eau de refroidissement, dans un dispositif à impact alimenté en air permettant le convoyage des granulés le long d'un canal curviligne en même temps que l'élimination de l'eau au travers de plusieurs grilles (appareil du type GT 800/2, de la société Automatik Plastics Machinery). L'air utilisé est de l'air ambiant prélevé dans l'atelier, à la température de 20°C et au débit de 8000 m³.h⁻¹. Le temps de séjour des granulés dans l'appareil séparateur est de l'ordre de 1 s.

Le débit total d'eau de refroidissement utilisé sur la plateforme est de 37 m³.h⁻¹. La température de l'eau en sortie de plateforme est de 35°C.

Les granulés sortant du séparateur ne sont soumis à aucun traitement complémentaire de refroidissement.

La durée du contact entre le matériau extrudé et le liquide de refroidissement (étapes b+c+d) est égale à 14 secondes.

En sortie de refroidisseur, les granulés passent sur un crible, puis sont envoyés dans un silo de stockage au moyen d'un dispositif de transport pneumatique.

La température et le taux d'humidité des granulés, mesurés pendant l'opération de granulation, sont résumés dans le Tableau 1. L'indice de viscosité, la masse moyenne de granulés et l'indice de jaune, mesurés sur un échantillon moyen prélevé en sortie du séparateur, sont rassemblés dans le Tableau 2. L'indice de jaune mesuré sur un échantillon représentatif du lot de polyamide fabriqué, prélevé en sortie de silo après 48 h de stockage, est également reporté dans le Tableau 2.

### Exemple 4 (invention)

### Préparation de polyamide 66

Du polyamide 66 est préparé à partir d'une solution aqueuse de Sel N (mélange équimolaire d'hexaméthylènediamine et d'acide adipique), par un procédé continu standard connu de l'homme du métier. Ce procédé comprend les étapes successives suivantes : concentration par évaporation de la solution de Sel N jusqu'à une concentration de 75% en masse ; amidification sous pression de 1,85 MPa avec élimination continue de vapeur d'eau ; détente jusqu'à une pression proche de la pression atmosphérique accompagnée d'un chauffage jusqu'à 275°C et élimination de vapeur d'eau ; finition à température constante sous pression proche de la pression atmosphérique. Au cours de cette étape de finition, le polymère fondu est maintenu dans un réacteur (finisseur) à 275°C, sous atmosphère autogène régulée à 102 kPa. Le temps de séjour dans le finisseur est de 30 minutes. En sortie de l'appareil, une pompe à engrenages permet de soutirer le polymère fondu et d'alimenter une conduite de transfert, permettant ainsi le transport du polymère jusqu'au dispositif de granulation. Le débit de polymère est de 1500 kg.h⁻¹.

### Extrusion, granulation et refroidissement du polymère

En sortie de la conduite de transfert, le polymère fondu est extrudé sous forme de joncs au travers d'une filière comprenant 28 trous (étape a)). Les opérations successives suivantes sont alors réalisées :
- Transport des joncs sur une plage de guidage recouverte d'un film d'eau (étape b)) ; cette eau est alimentée à une température de 22°C par une lèvre située en tête de plage, et aussi par plusieurs rampes équipées de buses de pulvérisation situées au-dessus de la plage. La longueur parcourue par les joncs sur la plage est de 1,2 m.
- Alimentation des joncs partiellement refroidis dans un bloc de coupe (type : USG 300, de la société Automatik Plastics Machinery) comprenant un dispositif d'entraînement des joncs, assurant une vitesse d'appel des joncs de 114 m.min⁻¹, et un dispositif de coupe au moyen d'une fraise et d'une contre-lame. Les joncs sont coupés dans le dispositif de coupe (étape c)) et les granulés résultants sont entraînés par l'eau.
- Convoyage des granulés en mélange avec de l'eau, dans une conduite de longueur égale à 2,1 m (suite de l'étape b)) ; le temps de passage des granulés dans cette conduite est égal à 3 s environ.
- Séparation des granulés de l'eau de refroidissement (étape d)), dans un dispositif à impact alimenté en air permettant le convoyage des granulés le long d'un canal curviligne en même temps que l'élimination de l'eau au travers de plusieurs grilles (appareil de type GT 400/2, de la société Automatik Plastics Machinery). L'air utilisé pour cette séparation est de l'air ambiant prélevé dans l'atelier, à la température de 20°C et au débit de 2700 m³.h⁻¹. Le temps de séjour des granulés dans l'appareil séparateur est compris entre 1 et 2 s.

Le débit total d'eau de refroidissement utilisé sur la plateforme est de 11 m³.h⁻¹. La température finale de l'eau de refroidissement est de 36°C.

La durée du contact entre le matériau extrudé et le liquide de refroidissement (étapes b+c+d) est égale à 5 secondes.

Les granulés sortant du séparateur alimentent un refroidisseur de type convoyeur hélicoïdal vibrant (étape e)) (commercialisé par la société Vibra Maschinenfabrik). Ce refroidisseur comprend un trajet hélicoïdal ascendant de 19 spires de longueur développée 39 m, le long d'un profil ouvert de section rectangulaire. La paroi métallique de ce canal est refroidie au moyen de circuits de refroidissement de type demi-coquille, rapportés sur la face externe du canal ; ces circuits sont alimentés en eau à une température de 22°C, au débit total de 2 m³.h⁻¹. La température de sortie de l'eau de refroidissement est de 36°C. Le temps de séjour des granulés dans le refroidisseur est de 4 minutes. Les granulés sortant du refroidisseur sont directement conditionnés en conteneurs en carton (octabin) garnis de saches plastique. Ces conteneurs, d'une capacité de 1000 kg, sont ensuite stockés dans l'atelier, après fermeture.

La température et le taux d'humidité des granulés sont mesurés sur plusieurs échantillons, prélevés à la sortie du séparateur (qui correspond à l'entrée du refroidisseur), ou à la sortie du refroidisseur. Les résultats obtenus sont résumés dans le Tableau 1.

D'autres caractéristiques (indice de viscosité, masse moyenne de granulés et indice de jaune) sont mesurées sur un échantillon prélevé en sortie de refroidisseur. L'indice de jaune est mesuré aussi sur un échantillon représentatif du lot de polyamide fabriqué, prélevé dans une sache après 48 h de stockage. Les résultats correspondants sont rassemblés dans le Tableau 2.

### Exemple 5 (comparatif)

On reproduit les caractéristiques de l'exemple 4, à la différence près que le convoyeur hélicoïdal vibrant n'est ici pas refroidi par un circuit d'eau. Le seul refroidissement des granulés observé est lié aux échanges thermiques par convection naturelle avec l'air ambiant de l'atelier, pendant le parcours de 4 minutes dans le convoyeur hélicoïdal vibrant.

Les granulés sortant du convoyeur hélicoïdal vibrant sont directement conditionnés en conteneurs en carton (octabin) garnis de saches plastique. Ces conteneurs, d'une capacité de 1000 kg, sont ensuite stockés dans l'atelier, après fermeture.

Comme dans l'exemple 4, la durée du contact entre le matériau extrudé et le liquide de refroidissement (étapes b+c+d) est égale à 5 secondes. L'étape e) est ici supprimée.

La température et le taux d'humidité des granulés sont mesurés sur plusieurs échantillons, prélevés à la sortie du séparateur (qui correspond à l'entrée du refroidisseur), ou à la sortie du refroidisseur. Les résultats obtenus sont résumés dans le Tableau 1.

D'autres caractéristiques (indice de viscosité, masse moyenne de granulés et indice de jaune) sont mesurées sur un échantillon prélevé en sortie de refroidisseur. L'indice de jaune est mesuré aussi sur un échantillon représentatif du lot de polyamide fabriqué, prélevé dans une sache après 48 h de stockage. Les résultats correspondants sont rassemblés dans le Tableau 2.

**Tableau 1 : Température et taux d'humidité mesurées sur les granulés en différents points du procédé**

| Exemple | Température (°C) | | Taux d'humidité (% massique) | |
|---|---|---|---|---|
| | Entrée refroidisseur * | Sortie refroidisseur * | Entrée refroidisseur * | Sortie refroidisseur * |
| 1 (invention) | 80 ± 2 | 27 ± 3 | 0,65 | 0,34 |
| 2 (invention) | 89 ± 5 | 29 ± 2 | 0,47 | 0,32 |
| 3 (comparatif) | 38 ± 1** | - | 0,60 ± 0,15** | - |
| 4 (invention) | 100 ± 1 | 48 ± 1 | 0,36 | 0,24 |
| 5 (comparatif) | 100 ± 1 | 77 ± 2 | 0,37 | 0,22 |

| | | | | |
|---|---|---|---|---|
| * Dans le cas de l'exemple comparatif 5, l'efficacité du refroidissement est mauvaise ; le terme de refroidisseur a cependant été conservé. ** Il s'agit dans ce cas de mesures effectuées sur les granulés en fin d'étape d) de séparation eau/granulés, puisque l'étape e) de refroidissement après séparation est ici absente. | | | | |

**Tableau 2 : Caractéristiques du polymère final**

| Exemple | Indice de viscosité (mL.g⁻¹) | Masse moyenne de granulés (g/100 granulés) | Indice de jaune (en sortie du refroidisseur) | Indice de jaune (polymère, après 48h de stockage) |
|---|---|---|---|---|
| 1 (invention) | 112 | 2,40 | -4,5 (conforme) | -4 (conforme) |
| 2 (invention) | 129 | 2,45 | -4 (conforme) | -4 (conforme) |
| 3 (comparatif) | 128 | 2,50 | -4 (conforme) | -3,5 (conforme) |
| 4 (invention) | 129 | 2,35 | -3,5 (conforme) | -3 (conforme) |
| 5 (comparatif) | 129 | 2,35 | -3,5 (conforme) | +2 (non conforme) |

A la lecture des résultats décrits dans les exemples, il apparaît clairement que la mise en oeuvre d'une étape e) de refroidissement des granulés après les différentes étapes a) à d) permet, lorsque les différentes étapes sont réalisées dans les conditions de température et de temps de séjour spécifiées, d'atteindre des teneurs en humidité faibles, dans la plage souhaitée, sans préjudice pour la qualité finale du polyamide.

L'exemple comparatif 3 met en évidence qu'un temps de contact trop long entre le liquide de refroidissement contenant de l'eau et les granulés, s'il permet d'éviter l'étape e) de refroidissement, conduit à une teneur en humidité beaucoup plus élevée.

L'exemple comparatif 5 démontre qu'un refroidissement inefficace, ne permettant pas d'atteindre une température finale dans le domaine souhaité, conduit à une altération inacceptable de la couleur des granulés de polyamide (jaunissement).

## Revendications

1. Procédé de préparation de granulés de polyamide, comprenant les étapes suivantes :
a) extruder le polyamide à l'état fondu,
b) refroidir le matériau obtenu à l'aide d'un liquide de refroidissement contenant de l'eau et étant à une température comprise entre 10 et 80 °C,
c) couper le matériau sous la forme de granulés,
d) séparer le liquide de refroidissement et le matériau,
e) refroidir les granulés séparés du liquide de refroidissement jusqu'à atteindre une température moyenne des granulés inférieure ou égale à 55°C,
- l'étape c) de coupe étant réalisée lors de l'étape b), après l'étape b) et avant l'étape de séparation d), ou après l'étape de séparation d),
- la durée du contact entre le matériau extrudé et le liquide de refroidissement étant inférieure ou égale à 10 secondes, et
- la durée de l'étape e) étant inférieure ou égale à 10 minutes.

2. Procédé selon la revendication 1, **caractérisé en ce que** le liquide de refroidissement est de l'eau.

3. Procédé selon l'une des revendications 1 ou 2, **caractérisé en ce que** la température moyenne des granulés avant l'étape e) est comprise entre 60 et 150°C.

4. Procédé selon l'une quelconque des revendications précédentes, **caractérisé en ce que** l'étape e) est réalisée par traitement des granulés avec un gaz à une température comprise entre 0 et 40°C.

5. Procédé selon la revendication 4, **caractérisé en ce que** le gaz de l'étape e) est l'air, de préférence de l'air ambiant.

6. Procédé selon la revendication 4 ou 5, **caractérisé en ce que** l'étape e) est réalisée à l'aide d'un lit fluidisé.

7. Procédé selon la revendication 4 ou 5, **caractérisé en ce que** l'étape e) est mise en oeuvre à l'aide d'un convoyeur équipé d'un système de refroidissement direct par injection d'air.

8. Procédé selon l'une quelconque des revendications 1 à 3, **caractérisé en ce que** l'étape e) est réalisée par mise en contact des granulés avec une surface dont la température est comprise entre 5 et 35°C.

9. Procédé selon la revendication 8, dans lequel l'humidité qui sort des granulés pour aller en phase gaz est éliminée, par exemple par convection naturelle.

10. Procédé selon l'une quelconque des revendications 8 ou 9, **caractérisé en ce que** l'étape e) est mise en oeuvre à l'aide d'un convoyeur équipé d'un système de refroidissement indirect par double enveloppe dans laquelle circule un fluide de refroidissement à une température comprise entre 5 et 35°C.

11. Procédé selon l'une quelconque des revendications précédentes, **caractérisé en ce qu'**il ne comprend pas d'étape de séchage en milieu gaz inerte des granulés de polyamide.

12. Utilisation du procédé tel que défini à l'une des revendications 1 à 11 pour la préparation de granulés de polyamide ayant un taux d'humidité compris entre 0,1 et 0,4 % en poids d'eau, par rapport au poids de granulés.

13. Utilisation selon la revendication 12, pour la préparation de granulés de polyamide ayant une masse moyenne de granulés comprise entre 1,0 et 5,0 g pour 100 granulés, de préférence 1,5 et 4,0 g pour 100 granulé.

## Patentansprüche

1. Verfahren zur Herstellung von Polyamidgranulat, das die folgenden Schritte umfasst:
a) Extrudieren des Polyamids in schmelzflüssigem Zustand,
b) Abkühlen des erhaltenen Materials mit Hilfe einer Kühlflüssigkeit, die Wasser enthält und sich bei einer Temperatur zwischen 10 und 80 °C befindet,
c) Schneiden des Materials in Granulatform,
d) Trennen der Kühlflüssigkeit und des Materials,
e) Abkühlen des von der Kühlflüssigkeit getrennten Granulats bis zum Erreichen einer mittleren Temperatur des Granulats kleiner oder gleich 55 °C,
- wobei der Schneideschritt c) während Schritt b), nach Schritt b) und vor dem Trennschritt d) oder nach dem Trennschritt d) durchgeführt wird,
- wobei die Dauer des Kontakts zwischen dem extrudierten Material und der Kühlflüssigkeit kleiner oder gleich 10 Sekunden ist und
- wobei die Dauer von Schritt e) kleiner oder gleich 10 Minuten ist.

2. Verfahren nach Anspruch 1, **dadurch gekennzeichnet, dass** es sich bei der Kühlflüssigkeit um Wasser handelt.

3. Verfahren nach Anspruch 1 oder 2, **dadurch gekennzeichnet, dass** die mittlere Temperatur des Granulats vor Schritt e) zwischen 60 und 150 °C liegt.

4. Verfahren nach einem der vorhergehenden Ansprüche, **dadurch gekennzeichnet, dass** der Schritt e) durch Behandeln des Granulats mit einem Gas bei einer Temperatur zwischen 0 und 40 °C durchgeführt wird.

5. Verfahren nach Anspruch 4, **dadurch gekennzeichnet, dass** es sich bei dem Gas von Schritt e) um Luft, vorzugsweise Umgebungsluft, handelt.

6. Verfahren nach Anspruch 4 oder 5, **dadurch gekennzeichnet, dass** Schritt e) mit Hilfe eines Wirbelbetts durchgeführt wird.

7. Verfahren nach Anspruch 4 oder 5, **dadurch gekennzeichnet, dass** Schritt e) mit Hilfe einer Fördereinrichtung, die mit einem System zur direkten Kühlung durch Einleiten von Luft ausgestattet ist, durchgeführt wird.

8. Verfahren nach einem der Ansprüche 1 bis 3, **dadurch gekennzeichnet, dass** Schritt e) durch Inkontaktbringen des Granulats mit einer Oberfläche, deren Temperatur zwischen 5 und 35 °C liegt, durchgeführt wird.

9. Verfahren nach Anspruch 8, bei dem die aus dem Granulat austretende und in die Gasphase übergehende Feuchtigkeit eliminiert wird, beispielsweise durch natürliche Konvektion.

10. Verfahren nach Anspruch 8 oder 9, **dadurch gekennzeichnet, dass** Schritt e) mit Hilfe einer Fördereinrichtung, die mit einem System zur indirekten Kühlung durch einen Doppelmantel, in dem eine Kühlflüssigkeit bei einer Temperatur zwischen 5 und 35 °C umläuft, ausgestattet ist, durchgeführt wird.

11. Verfahren nach einem der vorhergehenden Ansprüche, **dadurch gekennzeichnet, dass** sie keinen Schritt der Trocknung des Polyamidgranulats in Inertgasumgebung umfasst.

12. Verwendung des Verfahrens gemäß einem der Ansprüche 1 bis 11 zur Herstellung von Polyamidgranulat mit einem Feuchtigkeitsgehalt zwischen 0,1 und 0,4 Gew.-% Wasser, bezogen auf das Gewicht des Granulats.

13. Verwendung nach Anspruch 12 zur Herstellung von Polyamidgranulat mit einer mittleren Masse des Granulats zwischen 1,0 und 5,0 g pro 100 Granulatkörner, vorzugsweise 1,5 und 4,0 g pro 100 Granulatkörner.

## Claims

1. Process for the preparation of polyamide granules, comprising the following stages:
a) extruding the polyamide in the molten state,
b) cooling the material obtained using a water-comprising cooling liquid which is at a temperature of between 10 and 80°C,
c) cutting the material into the form of granules,
d) separating the cooling liquid and the material,
e) cooling the granules separated from the cooling liquid until a mean temperature of the granules of less than or equal to 55°C is achieved,
- the cutting stage c) being carried out during stage b), after stage b) and before the separation stage d), or after the separation stage d),
- the duration of the contact between the extruded material and the cooling liquid being less than or equal to 10 seconds, and
- the duration of stage e) being less than or equal to 10 minutes.

2. Process according to Claim 1, **characterized in that** the cooling liquid is water.

3. Process according to either of Claims 1 and 2, **characterized in that** the mean temperature of the granules before stage e) is between 60 and 150°C.

4. Process according to any one of the preceding claims, **characterized in that** stage e) is carried out by treatment of the granules with a gas at a temperature of between 0 and 40°C.

5. Process according to Claim 4, **characterized in that** the gas of stage e) is air, preferably ambient air.

6. Process according to Claim 4 or 5, **characterized in that** stage e) is carried out using a fluidized bed.

7. Process according to Claim 4 or 5, **characterized in that** stage e) is carried out using a conveyor equipped with a system for direct cooling by injection of air.

8. Process according to any one of Claims 1 to 3, **characterized in that** stage e) is carried out by bringing the granules into contact with a surface, the temperature of which is between 5 and 35°C.

9. Process according to Claim 8, in which the moisture which exits from the granules to go into the gas phase is eliminated, for example by natural convection.

10. Process according to either one of Claims 8 and 9, **characterized in that** stage e) is carried out using a conveyor equipped with a system for indirect cooling by a jacket in which a cooling fluid circulates at a temperature of between 5 and 35°C.

11. Process according to any one of the preceding claims, **characterized in that** it does not comprise a stage of drying the polyamide granules in an inert gas environment.

12. Use of the process as defined in one of Claims 1 to 11 for the preparation of polyamide granules having a moisture content of between 0.1% and 0.4% by weight of water, with respect to the weight of granules.

13. Use according to Claim 12 for the preparation of polyamide granules having a mean weight of granules of between 1.0 and 5.0 g per 100 granules, preferably 1.5 and 4.0 g per 100 granules.
